# EUROPEAN PATENT APPLICATION

(11) **EP 4 435 650 A1**
(43) Date of publication of application: **25.09.2024**
(21) Application number: 23184902.7
(22) Date of filing: 12.07.2023
(51) Int. Cl.: G06F 21/57, G06F 21/74, G06F 15/78

(54) **MICROCONTROLLER AUTHORITY MANAGEMENT EXECUTION METHOD AND MICROCONTROLLER AUTHORITY MANAGEMENT EXECUTION SYSTEM CAPABLE OF PROVIDING A USER MODE AND AN ADMINISTRATOR MODE**

(30) Priority: 20.03.2023 TW 112110200
(71) Applicant: iMQ Technology Inc., Hsinchu City 300 (TW)
(72) Inventor: Lien, E-Jen, 333 Taoyuan City (TW)
(74) Representative: Straus, Alexander

(57) **Abstract**

A microcontroller authority management execution method includes providing a microcontroller (10), generating an authority management interface (UI), configuring a user mode and an administrator mode corresponding to the memory resources of the microcontroller (10) by using a development software kit through the authority management interface (UI) and determining an available peripheral device set and an available function set used for the user mode through the memory resources when the administrator mode is performed. When the available peripheral device set and the available function set are used under the user mode, the available peripheral device set and the available function set are unchangeable.

## Description

### Field of the Invention

The present invention relates to a microcontroller authority management execution method and a microcontroller authority management execution system, and more particularly, a microcontroller authority management execution method and the microcontroller authority management execution system capable of providing a user mode and an administrator mode.

### Background of the Invention

Various microcontrollers are applied daily with the rapid development of science and technology. A microcontroller can integrate a processor, memory, a timer, a counter, and input/output interfaces on an integrated circuit chip. Therefore, the microcontroller is also called a microcomputer. Currently, the microcontrollers can support 32-bit and 64-bit based trusted execution environments (TEE). The TEE is a secure environment for performing particular and critical tasks. Therefore, the confidentiality and integrity of programs and data can be protected.

The TEE provides related resources to users having different authority levels according to the hardware manufacturer's configurations. However, the current TEE mechanism for microcontrollers lacks flexibility for various application scenarios. For example, if a program developer wants to protect his design resources, the complexity of using calling and returning functions for accessing data to various security fields is significantly increased.

### Summary of the Invention

The present invention aims at providing a microcontroller authority management execution method and a microcontroller authority management execution system capable of performing a user mode and an administrator mode. The user mode and the administrator mode of the microprocessor can be applied to various scenarios and applications to provide high data protection capabilities and high operating flexibility.

This is achieved by a microcontroller authority management execution method and a microcontroller authority management execution system according to the independent claims. The dependent claims pertain to corresponding further developments and improvements.

### Brief Description of the Drawings

In the following, the invention is further illustrated by way of example, taking reference to the accompanying drawings. Thereof
FIG. 1 is a block diagram of a microcontroller authority management execution system according to an embodiment of the present invention;
FIG.2 illustrates allocating a user mode and an administrator mode in a memory resource of the microcontroller authority management execution system in FIG. 1;
FIG.3 illustrates an authority management interface of the microcontroller authority management execution system in FIG. 1;
FIG.4 is a flow chart of performing a boot process of the microcontroller authority management execution system in FIG. 1;
FIG.5 illustrates matching a boot ROM with a digest check device of the microcontroller authority management execution system in FIG. 1; and
FIG.6 is a flow chart of performing a microcontroller authority management execution method by the microcontroller authority management execution system in FIG. 1

### Detailed Description

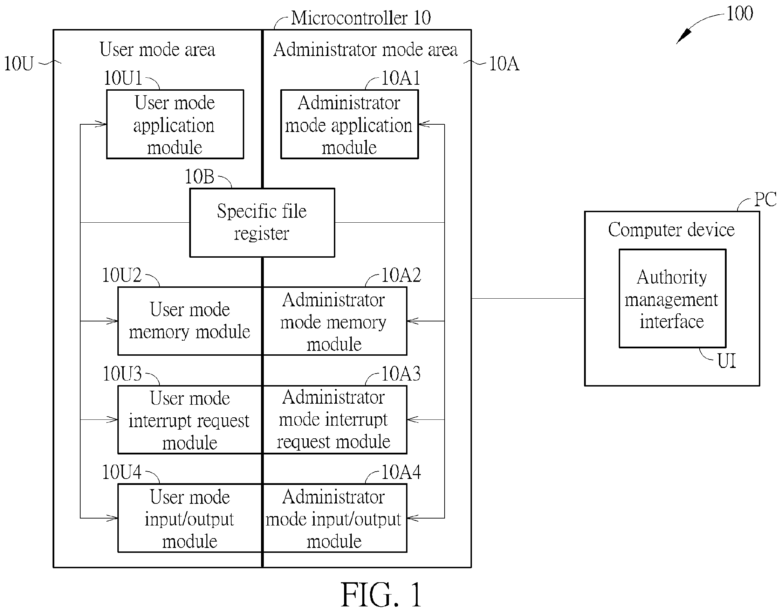

FIG. 1 is a block diagram of a microcontroller authority management execution system 100 according to an embodiment of the present invention. The microcontroller authority management execution system 100 includes a microcontroller 10 and a computer device PC. Here, various software kits, hardware components, and peripheral devices of the microcontroller 100 can be divided into two areas. For example, in FIG. 1, the microcontroller 10 can be divided into a user mode area 10U and an administrator mode area 10A. The user mode area 10U corresponds to a user mode having relatively low management authority. The user mode is illustrated later. The administrator mode area 10A corresponds to the administrator mode having relatively high management authority. The administrator mode is described later. The user mode area 10U includes a user mode application module 10U1, a user mode memory module 10U2, a user mode interrupt request (IRQ) module 10U3, and a user mode input/output module 10U4. The user mode application module 10U1 can include user-operable objects, application functions, or attribute data. The user mode memory module 10U2 can be a static random access memory (SRAM) configured by the user. The user mode memory module 10U2 is coupled to the user mode application module 10U1. The user mode interrupt request module 10U3 is related to the user mode memory module 10U2. Here, an interrupt request can temporarily cease a running program and enable the execution of a particular program (i.e., an interrupt operation process). In practice, the interrupt request can include an IRQ format identification index. The user mode input/output module 10U4 is coupled to the user mode interrupt request module 10U3. The user mode input/output module 10U4 can be used for controlling the user's available devices, such as a universal asynchronous receiver/transmitter (UART), a general purpose input/output (GPIO), and peripheral devices. The administrator mode area 10A includes an administrator mode application module 10A1, an administrator mode memory module 10A2, an administrator mode interrupt request module 10A3, and an administrator mode input/output module 10A4. The administrator mode application module 10A1 can include administrator-operable objects, application functions, or attribute data. The administrator mode memory module 10A2 can be the SRAM configured by the administrator. The administrator mode memory module 10A2 is coupled to the administrator mode application module 10A1. The administrator mode interrupt request module 10A3 is related to the administrator mode memory module 10A2. The administrator mode input/output module 10A4 is related to the administrator mode interrupt request module 10A3. The administrator mode input/output module 10A4 can be used for controlling the administrator's available devices, such as the UART, the GPIO, and the peripheral devices. The computer device PC is coupled to the microcontroller 10 for setting the microcontroller 10. In the microcontroller authority management execution system 100, the computer device PC can configure an administrator mode corresponding to the administrator mode area 10A and a user mode corresponding to the user mode area 10A of the memory resources of the microcontroller 10 by using a development software kit through an authority management interface. The computer device PC can determine an available peripheral device set and an available function set used for the user mode through the memory resources when the administrator mode is performed. Since the authority of the administrator mode is greater than the authority of the user mode, some functions and peripheral devices can be allocated to the user mode when the administrator mode is performed. However, since the authority is relatively low in the user mode, when the available peripheral device set and the available function set are used under the user mode, the available peripheral device set and the available function set are unchangeable. The source codes cannot be browsed. Further, the microcontroller 10 can include a specific file register 10B. The specific file register 10B can be used for saving specific files or special data. Here, the specific files and the special data can be designated for use in the user and/or administrator modes.

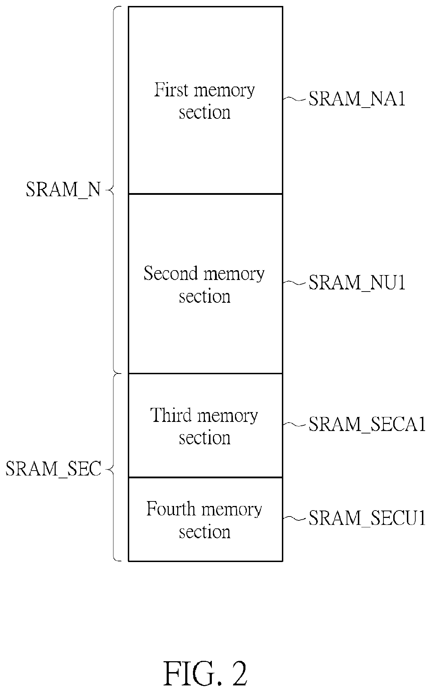

FIG.2 is an illustration of allocating the user mode and the administrator mode in the memory resource of the microcontroller authority management execution system 100. As previously mentioned, the microcontroller 10 includes an administrator mode memory module 10A2, and a user mode memory module 10U2. Memory addresses corresponding to the administrator mode memory module 10A2 and memory addresses corresponding to the user mode memory module 10U2 are separated. Details are illustrated below. The general data of the administrator mode can be allocated in the first memory section SRAM_NA1 of the memory resource. Therefore, the first memory section SRAM_NA1 can be called a general memory section SRAM_NA1 of the administrator. The general data of the user mode can be allocated in a second memory section SRAM_NU1 of the memory resource. Therefore, the second memory section SRAM_NU1 can be called a general memory section SRAM_NU1 of the user. The security data of the administrator mode can be allocated in a third memory section SRAM_SECA1 of the memory resource. Therefore, the third memory section SRAM_SECA1 can be called a secure memory section SRAM_SECA1 of the administrator. The security data of the user mode can be allocated in a fourth memory section SRAM_SECU1 of the memory resource. Therefore, the fourth memory section SRAM_SECU1 can be called a secure memory section SRAM_SECU1 of the user. Thus, the general memory section SRAM_NA1 of the administrator and the general memory section SRAM_NU1 of the user can be categorized as a general memory section SRAM_N. The general memory section SRAM_N can access data having a normal security level. The secure memory section SRAM_SECA1 of the administrator and the secure memory section SRAM_SECU1 of the user can be categorized as secure memory section SRAM_SEC. In practice, the secure memory section SRAM_SEC can be used for saving data to a physical random access memory by scrambling memory addresses. Therefore, the secure memory section SRAM_SEC has a higher security level for accessing confidential data. Further, a mapping table can be generated by the computer device PC. The mapping table can be used for mapping input addresses of the memory resources to output addresses of the memory resources. Therefore, the security level of accessing confidential data can be further improved. The mapping table can be generated according to a plurality of random numbers. For example, the plurality of random numbers can be generated according to a physical unclonable function (PUF) entropy source. Further, the general memory section SRAM_NA1 of the administrator, the general memory section SRAM_NU1 of the user, the secure memory section SRAM_SECA1 of the administrator, and the secure memory section SRAM_SECU1 of the user are non-overlapped.

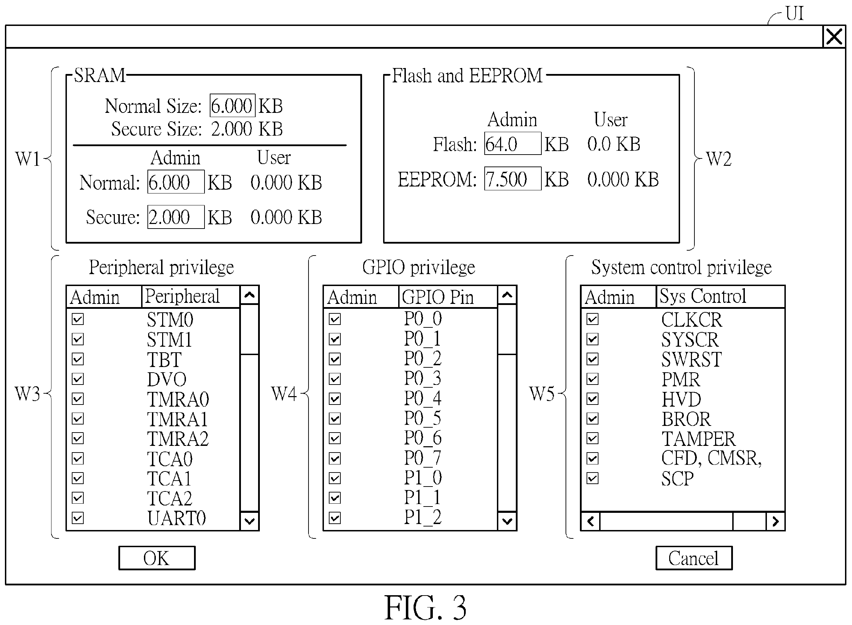

FIG.3 illustrates the authority management interface UI of the microcontroller authority management execution system 100. The authority management interface UI can be shown in FIG.3, but it is not limited thereto. Any reasonable authority management interface modifications fall into the present invention's scope. The development software kit can generate the authority management interface UI through the computer device PC for controlling and configuring the microcontroller 10. The authority management interface UI can include a plurality of windows, such as windows W1 to W5. The administrator can use the authority management interface UI for setting various parameters. For example, the administrator can allocate an available SRAM size to the administrator through the window W1. For example, window W1 can configure a size for the general memory section (i.e., 6KB) and a size for the secure memory section (i.e., 2KB). Further, residue memory resources can be allocated to the user. The administrator can allocate sizes of the flash memory and the Electrically-Erasable Programmable Read-Only Memory (EEPROM) used for the administrator through the window W2, such as allocating the size of the flash memory as 64 KB and allocating the size of the EEPROM as 7.5KB. The administrator can set the peripheral privilege authority through a window W3, such as selecting available peripheral devices of the administrator mode by using checkboxes and drop-down menus. The administrator can set the privilege of each GPIO pin through a window W4, such as selecting at least one available GPIO pin of the administrator mode by using checkboxes and drop-down menus. The administrator can set the authority for controlling parameter privileges of the system through the window W5, such as selecting controllable parameters of the administrator mode by using checkboxes and drop-down menus. However, in FIG.3, window positions, interface adjustment modes, interface parameter configuration methods, and interface templates are not limited.

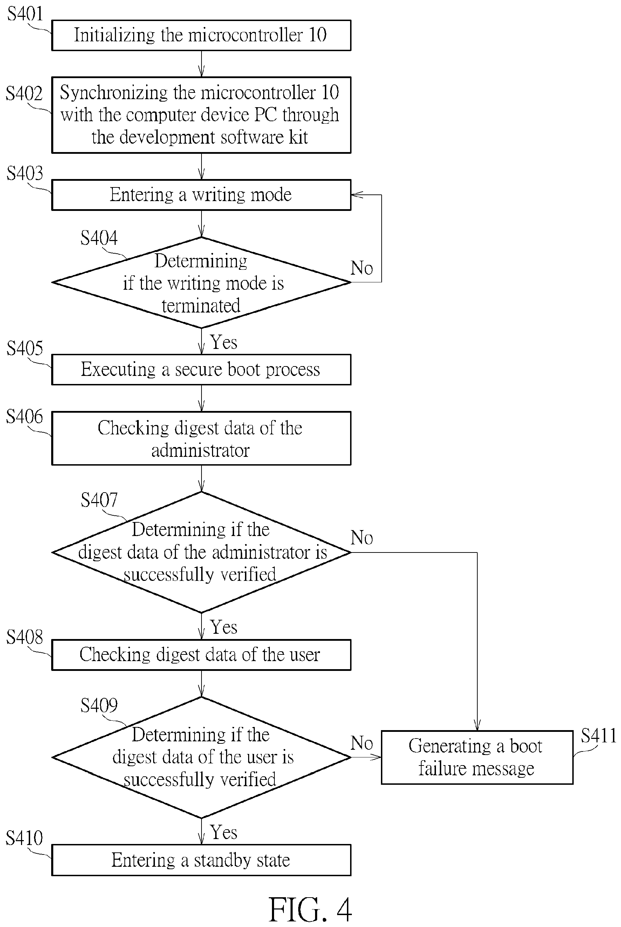

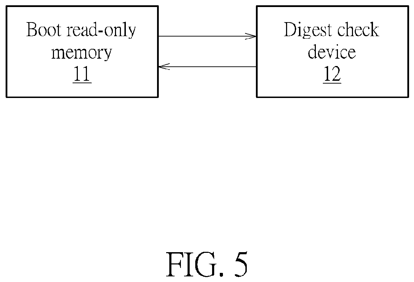

FIG.4 is a flow chart of performing a boot process of the microcontroller authority management execution system 100. FIG.5 illustrates a boot ROM and a digest check device of the microcontroller authority management execution system 100. FIG.5 illustrates matching a boot ROM 11 with a digest check device 12 of the microcontroller authority management execution system 100. The boot process performed by the microcontroller authority management execution system 100 includes step S401 and step S411. Any reasonable technology modification falls into the scope of the present invention. Step S401 and step S411 are illustrated below.

| | |
|---|---|
| Step S401: | initializing the microcontroller 10; |
| Step S402: | synchronizing the microcontroller 10 with the computer device PC through the development software kit; |
| Step S403: | entering a writing mode; |
| Step S404: | determining if the writing mode is terminated; if yes, entering step S405; else, entering step S403; |
| Step S405: | executing a secure boot process; |
| Step S406: | checking digest data of the administrator; |
| Step S407: | determining if the digest data of the administrator is successfully verified; if yes, enter step S408; else, enter step S411; |
| Step S408: | checking digest data of the user; |
| Step S409: | determining if the digest data of the user is successfully verified; if yes, enter step S410; else, enter step S411; |
| Step S410: | entering a standby state; |
| Step S411: | generating a boot failure message. |

After the computer device PC is linked to the microcontroller 10 through the development software kit, in step S401, the microcontroller 10 can be initialized. Then, the microcontroller 10 can be synchronized with the computer device PC through the development software kit. In step S403, the microcontroller 10 enters the writing mode. In step S404, the computer device PC determines if the writing mode is terminated. If the writing mode is completed, the computer device PC can enter step S405 to execute the secure boot process. If the writing mode is still performed, the computer device PC enters step S403. As shown in FIG.5, in practice, the computer device PC can check if a first hardware component matches with a second hardware component. If the first hardware component matches the second hardware component, the secure boot process can be successfully verified. For example, the first hardware component can be a boot ROM 11. The second hardware component can be a digest check device 12. The boot ROM 11 can use a word string with a predetermined bit length for checking if the boot ROM 11 matches with the digest check device 12. For example, the contents of the boot ROM 11 and the digest check device 12 can be compared using 256-bit hash output data. In step S406, the digest data of the administrator can be verified. In practice, the digest data of the administrator saved in the digest check device 12 can be compared with digest data held in the boot ROM 11. In step S407, the computer device PC can determine if the digest data of the administrator is successfully verified. In the digest data of the administrator is successfully verified, the computer device PC enters step S408. If the verification of the digest data of the administrator fails, the computer device PC enters step S411 to generate a boot failure message. In other words, since the microcontroller authority management execution system 100 can check string data between different hardware components to determine whether a secure boot process is performed, booting security for configuring the microcontroller 10 can be improved.

Any reasonable authority configuration or function calling process of the microcontroller authority management execution system 100 falls into the scope of the present invention. For example, the microcontroller can be a 16-bit-based microcontroller. The microcontroller authority management execution system 100 can acquire a set of interrupt vector resources, then indicate the set of interrupt vector resources to the administrator and user modes using the development software kit. As previously mentioned, the administrator mode has relatively high management authority. Thus, all interrupt vector resources of the microcontroller 10 are available under the administrator mode. Further, some interrupt vector resources called under the user mode can be preconfigured from the set of interrupt vector resources when the administrator mode is performed. In another embodiment, the microcontroller authority management execution system 100 can acquire a particular interrupt vector. The microcontroller authority management execution system 100 can enter the user mode by using the particular interrupt vector after a function is wholly executed under the administrator mode. Then, the microcontroller authority management execution system 100 enters the administrator mode from the user mode and writes data to a special memory address using a special string. Here, suppose a subroutine call function of the user mode is pre-reserved in the administrator mode, after the user mode enters the administrator mode for completing the subroutine call function. In that case, the administrator mode can return to the user mode. Further, the microcontroller authority management execution system 100 can introduce a password to increase data security. For example, the microcontroller authority management execution system 100 can set an administrator mode password. Therefore, the microcontroller authority management execution system 100 can verify the administrator mode password by the development software kit for protecting the parameters of the available peripheral device set and the available function set after the administrator mode is performed.

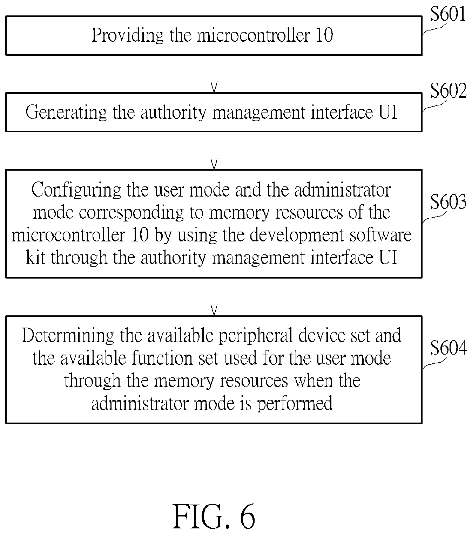

FIG.6 is a flow chart of performing a microcontroller authority management execution method by the microcontroller authority management execution system 100. The microcontroller authority management execution method includes from step S601 to step S604. Any reasonable technology modification falls into the scope of the present invention. Steps S601 to Step S604 are illustrated below.

| | |
|---|---|
| Step S601: | providing the microcontroller 10; |
| Step S602: | generating the authority management interface UI; |
| Step S603: | configuring the user mode and the administrator mode corresponding to memory resources of the microcontroller 10 by using the development software kit through the authority management interface UI; |
| Step S604: | determining the available peripheral device set and the available function set used for the user mode through the memory resources when the |
| | administrator mode is performed |

Details of step S601 to step S604 are previously illustrated. Thus, they are omitted here. The microcontroller authority management execution system 100 can configure all authority of functions, data libraries, and peripheral devices used by the microcontroller 10. Therefore, the microcontroller authority management execution system 100 can be applied to various scenarios and applications. Further, high data protection capabilities and high operating flexibility can also be provided.

The present invention discloses a microcontroller authority management execution method and a microcontroller authority management execution system. The microcontroller authority management execution system can configure all authority of functions, data libraries, and peripheral devices used by the microcontroller through the authority management interface. For example, the user mode has relatively low management authority. The administrator mode has relatively high management authority. Therefore, the microcontroller authority management execution system of the present invention can be applied to various scenarios and applications, providing high data protection capabilities and high operating flexibility.

## Claims

1. A microcontroller authority management execution method, **characterized by** comprising:
providing a microcontroller (10);
generating an authority management interface (UI);
configuring a user mode and an administrator mode corresponding to the memory resources of the microcontroller (10) by using a development software kit through the authority management interface (UI); and
determining an available peripheral device set and an available function set used for the user mode through the memory resources when the administrator mode is performed;
wherein when the available peripheral device set and the available function set are used under the user mode, the available peripheral device set and the available function set are unchangeable.

2. The method of claim 1, **characterized in that** the microcontroller (10) is a 16-bit based microcontroller (10), and the method further comprises:
acquiring a set of interrupt vector resources by a computer device (PC); and
indicating the set of interrupt vector resources to the administrator mode and the user mode by using the development software kit through the computer device (PC);
wherein all interrupt vector resources of the microcontroller (10) are available under the administrator mode, and some interrupt vector resources called under the user mode are preconfigured from the set of interrupt vector resources when the administrator mode is performed.

3. The method of claim 1, **characterized by** further comprising:
acquiring a particular interrupt vector by a computer device (PC);
entering the user mode by using the particular interrupt vector after a function is wholly executed under the administrator mode by the computer device (PC);
entering the administrator mode from the user mode and writing data to a particular memory address by using a particular string by the computer device (PC); and
wherein when a subroutine call function of the user mode is pre-reserved in the administrator mode, after the user mode enters the administrator mode for completing the subroutine call function, the administrator mode returns to the user mode.

4. The method of claim 1, **characterized by** further comprising:
generating a mapping table by a computer device (PC); and
mapping input addresses of the memory resources to output addresses of the memory resources according to the mapping table by the computer device (PC);
wherein the mapping table is generated according to a plurality of random numbers.

5. The method of claim 4, **characterized in that** the plurality of random numbers are generated according to a physical unclonable function (PUF) entropy source.

6. The method of claim 1, **characterized by** further comprising:
setting an administrator mode password by a computer device (PC); and
verifying the administrator mode password by the development software kit for protecting parameters of the available peripheral device set and the available function set after the administrator mode is performed.

7. The method of claim 1, **characterized by** further comprising:
allocating general data of the administrator mode in a first memory section (SRAM_NA1) of the memory resources;
allocating general data of the user mode in a second memory section (SRAM_NU1) of the memory resources;
allocating security data of the administrator mode in a third memory section (SRAM_SECA1) of the memory resources; and
allocating security data of the user mode in a fourth memory section (SRAM_SECU1) of the memory resources;
wherein the first memory section (SRAM_NA1), the second memory section (SRAM _NU1), the third memory section (SRAM_SECA1), and the fourth memory section (SRAM_SECU1) are non-overlapped.

8. The method of claim 1, **characterized by** further comprising:
enabling a secure boot process by a computer device (PC);
checking if a first hardware component matches with a second hardware component by the computer device (PC); and
passing a verification of the secure boot process after the first hardware component matches with the second hardware component by the computer device (PC);
wherein the first hardware component comprises a boot ROM (11), and the second hardware component comprises a digest check device (12).

9. The method of claim 8, **characterized in that** the boot ROM (11) uses a word string with a predetermined bit length to check if the boot ROM (11) matches the digest check device (12).

10. A microcontroller authority management execution system, **characterized by** comprising:
a microcontroller (10) comprising:
a user mode area (10U) comprising:
a user mode application module (10U1);
a user mode memory module (10U2) coupled to the user mode application module (10U1);
a user mode interrupt request module (10U3) coupled to the user mode memory module (10U2); and
a user mode input/output module (10U4) coupled to the user mode interrupt request module (10U3); and
an administrator mode area (10A) comprising:
an administrator mode application module (10A1);
an administrator mode memory module (10A2) coupled to the administrator mode application module (10A1);
an administrator mode interrupt request module (10A3) coupled to the administrator mode memory module (10A2); and
an administrator mode input/output module (10A4) coupled to the administrator mode interrupt request module (10A3); and
a computer device (PC) is related to the microcontroller (10) for configuring the microcontroller (10);
wherein the computer device (10) configures a user mode and an administrator mode corresponding to the memory resources of the microcontroller (10) by using a development software kit through an authority management interface (UI), the computer device (PC) determines an available peripheral device set and an available function set used for the user mode through the memory resources when the administrator mode is performed, and when the available peripheral device set and the available function set are used under the user mode, the available peripheral device set and the available function set are unchangeable.
